(19) Europäisches Patentamt
European Patent Office
Office européen des brevets

(11) **EP 4 566 754 A1**

(12) **EUROPEAN PATENT APPLICATION**
published in accordance with Art. 153(4) EPC

(43) Date of publication:
**11.06.2025 Bulletin 2025/24**

(21) Application number: **23877087.9**

(22) Date of filing: **15.09.2023**

(51) International Patent Classification (IPC):
**B24B 49/12** (2006.01)    **B24B 27/00** (2006.01)
**B24B 49/16** (2006.01)    **B25J 13/08** (2006.01)

(52) Cooperative Patent Classification (CPC):
**B24B 27/00; B24B 49/12; B24B 49/16; B25J 13/08**

(86) International application number:
**PCT/JP2023/033779**

(87) International publication number:
**WO 2024/080081 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.10.2022 JP 2022163537**

(71) Applicant: **JFE Steel Corporation**
**Tokyo 100-0011 (JP)**

(72) Inventors:
• **WATANABE, Taku**
**Tokyo 100-0011 (JP)**
• **ISHIDA, Kyohei**
**Tokyo 100-0011 (JP)**
• **HARADA, Junji**
**Tokyo 100-0011 (JP)**

(74) Representative: **Scott, Stephen John**
**YUJA IP LAW**
**4 Centenary House**
**The Avenue**
**York YO30 6AU (GB)**

(54) **PROJECTION POLISHING SYSTEM, PROJECTION POLISHING METHOD, AND METHOD FOR MANUFACTURING STEEL PRODUCT**

(57) A convex portion grinding system including: a shape measuring device (3) that measures three-dimensional shape and orientation of a target material; a convex portion detection device (4) that detects a convex portion on a surface of the target material and recognizes position and shape of the convex portion; a grinding device (7) including a grinding tool that grinds the convex portion; and a grinding tool control device (5) that calculates a trajectory along which the grinding tool moves based on the measured three-dimensional shape and orientation of the target material and the detected position and shape of the convex portion, and controls the grinding device so that the grinding tool moves along the trajectory while changing the contact angle of the grinding tool with respect to the convex portion.

*FIG. 1*

**Description**

TECHNICAL FIELD

The present disclosure relates to convex portion grinding systems, convex portion grinding methods, and methods of producing steel products. The present disclosure relates, in particular, to a convex portion grinding system, a convex portion grinding method, and a method of producing a steel product that remove a harmful convex portion from a surface of a steel product or the like.

BACKGROUND

In casting products, in order to mitigate the effects of "runners" which are paths for molten metal during casting, and "shrinkage cavities" which are harmful defects that can occur inside the product, a portion such as a "riser" is added to allow a final cooling process to occur outside the product. Typically, an unwanted portion is removed by cutting, shearing, hammering, folding under their own weight, or the like during the process of removing the casting product from the mold, but a portion may remain and become a harmful "convex portion" on a casting product surface.
Particularly in the case of producing a wide variety of products, the positions and shapes of convex portions are very diverse, and therefore convex portions are often removed by manual grinding with a grinder. Such convex portions can be as large as some tens of millimeters high, making the grinding workload burden high and making it difficult to secure necessary workers. Further, carrying out grinding at high speed is difficult when a convex portion is large or when grinding difficult-to-machine material such as high-alloy steel.
Patent Literature (PTL) 1 proposes a method in which a robot is equipped with a grinder and grinds while applying a constant pressing force along a predetermined machining trajectory. PTL 2 proposes a method of grinding steel material at high speed by machining in a non-oxidizing gas atmosphere.

CITATION LIST

Patent Literature

PTL 1: JP H03-178766 A
PTL 2: JP H11-267954 A

SUMMARY

(Technical Problem)

The technology of PTL 1 is a system that works along a pre-given trajectory and cannot automatically handle a large variety of products.
Further, the technology of PTL 2 requires large-scale line sealing, vacuuming, and the like, resulting in very high facility and running costs.
Regarding convex portions that occur on a wide variety of products, a human worker visually observes the workpiece, presses a grinder against a convex portion position of the workpiece at a pressure that feels appropriate, and stops pressing the grinder at an appropriate time. The worker visually determines whether the convex portion remains and decides whether to regrind or terminate the operation. There was a demand for automating such work.
In view of these circumstances, it would be helpful to provide a convex portion grinding system, a convex portion grinding method, and a method of producing a steel product that automatically grind convex portions that occur on a wide variety of products.

(Solution to Problem)

The inventors conducted extensive studies on solutions to the problems described above. An analysis of the work of workers revealed that the work included (1) measuring shape and orientation of a workpiece based on visual information, (2) an operation of pressing a grindstone of a grinder against the workpiece, (3) sensing and controlling grinding reaction force and load after pressing the grindstone against the workpiece, based on tactile sense and force sense, (4) changing the grindstone angle during grinding, and (5) inspecting a remaining convex portion after grinding based on visual information.

Based on the analysis of the work described above, as a method for automating grinding of a convex portion of a workpiece, the inventors propose a system that executes at least some of the following: (1) measuring shape and orientation of the workpiece using a three-dimensional shape measuring device, (2) recognizing a convex portion position, (3) measuring and controlling grinding reaction force and load, (4) controlling an operation of pressing against the convex portion position wherein a grindstone contact angle can be changed during grinding, and (5) inspecting a remaining convex portion after grinding and determining whether to regrind.

[1] A convex portion grinding system according to an embodiment of the present disclosure comprises:

a shape measuring device configured to measure three-dimensional shape and orientation of a target material;
a convex portion detection device configured to detect a convex portion on a surface of the target material and recognize position and shape of the convex portion;
a grinding device including a grinding tool configured to grind the convex portion; and
a grinding tool control device configured to calculate a trajectory along which the grinding tool moves based on the measured three-dimensional shape and orientation of the target material and the detected position and shape of the convex portion, and configured to control the grinding device so that the grinding tool moves along the trajectory while changing the contact angle of the grinding tool with respect to the convex portion.

[2] The convex portion grinding system according to [1], as an embodiment of the present disclosure, further comprising

a grinding reaction force measuring device configured to measure a grinding reaction force that the grinding tool receives from the target material, wherein
the grinding tool control device is configured to correct the trajectory based on the measured grinding reaction force and control the grinding device so that the grinding tool moves along the corrected trajectory.

[3] The convex portion grinding system according to [2], as an embodiment of the present disclosure, wherein

the grinding tool control device comprises a first grinding tool control device and a second grinding tool control device,
the first grinding tool control device is configured to correct the trajectory in the height direction based on a height component of the measured grinding reaction force, and
the second grinding tool control device is configured to correct the trajectory in a direction different from the height direction based on a component of the measured grinding reaction force in a direction different from the height direction.

[4] The convex portion grinding system according to any one of [1] to [3], as an embodiment of the present disclosure, further comprising
an inspection device configured to inspect a surface of the target material at a position of the convex portion after the convex portion is ground.
[5] The convex portion grinding system according to any one of [1] to [4], as an embodiment of the present disclosure, wherein

the grinding tool is a grindstone configured to rotate around an axis of rotation, and
the grinding tool control device is configured to control the grinding device so that the axis of rotation is tilted according to the position where the grindstone comes into contact with the convex portion.

[6] A convex portion grinding method according to an embodiment of the present disclosure comprises:

a shape measuring process of measuring three-dimensional shape and orientation of a target material;
a convex portion detection process of detecting a convex portion on a surface of the target material and detecting position and shape of the convex portion; and
a grinding process of calculating a trajectory along which a grinding tool moves to grind the convex portion based on the measured three-dimensional shape and orientation of the target material and the detected position and shape of the convex portion, and grinding the convex portion by moving the grinding tool along the trajectory while changing the contact angle of the grinding tool with respect to the convex portion.

[7] The convex portion grinding method according to [6], as an embodiment of the present disclosure, wherein

the grinding process further comprises measuring a grinding reaction force that the grinding tool receives from the target material, correcting the trajectory based on the measured grinding reaction force, and moving the grinding tool along the corrected trajectory to grind the convex portion.

[8] The convex portion grinding method according to [6] or [7], as an embodiment of the present disclosure, further comprising,

after the grinding process, an inspection process of inspecting a surface of the target material at the position of the convex portion.

[9] A method of producing a steel product according to an embodiment of the present disclosure, the method comprising

grinding a convex portion on a surface of a steel product, which is the target material, using the convex portion grinding method according to any one of [6] to [8].

(Advantageous Effect)

According to the present disclosure, a convex portion grinding system, a convex portion grinding method, and a method of producing a steel product can be provided that automatically grind convex portions that occur on a wide variety of products.

BRIEF DESCRIPTION OF THE DRAWINGS

In the accompanying drawings:

FIG. 1 is a schematic diagram of a convex portion grinding system according to an embodiment;
FIG. 2 is a diagram for explaining a reference point of a grindstone;
FIG. 3 is a diagram for explaining a contact angle of the grindstone;
FIG. 4 is a diagram illustrating an example of shape measurement and convex portion extraction;
FIG. 5 is a diagram illustrating another example of shape measurement and convex portion extraction;
FIG. 6 is a diagram illustrating an example of a method of generating a machining trajectory in the x-y plane;
FIG. 7 is a diagram illustrating calculation of the z-coordinate position of the machining trajectory;
FIG. 8 is a diagram illustrating an example configuration of a convex portion grinding system controlled according to grinding reaction force; and
FIG. 9 is a diagram illustrating another example configuration of the convex portion grinding system controlled according to the grinding reaction force.

DETAILED DESCRIPTION

A convex portion grinding system, a convex portion grinding method, and a method of producing a steel product according to an embodiment of the present disclosure are described below with reference to the drawings.

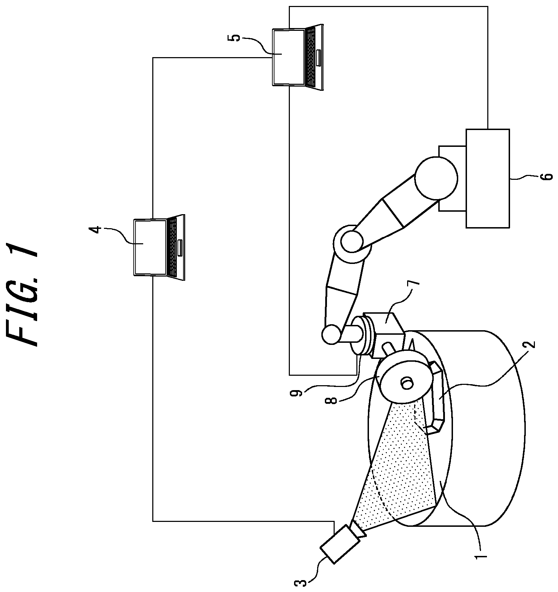

FIG. 1 illustrates an example of a schematic diagram of the convex portion grinding system according to the present embodiment. A convex portion 2 exists on the surface of a workpiece 1, which is an example of a target material. A three-dimensional shape measuring device 3, which is an example of a shape measuring device, measures the three-dimensional shape and orientation of the workpiece 1. As examples of the three-dimensional shape measuring device 3, a camera that carries out a three-dimensional scan of the workpiece 1, a shape laser sensor, or the like may be used. Based on a measurement result of the three-dimensional shape measuring device 3, an image processing device 4, which is an example of a convex portion detection device, detects the convex portion 2 on the surface of the workpiece 1 and recognizes the position and shape of the convex portion 2. A robot motion control device 5, which is an example of a grinding tool control device, executes an inverse kinematics calculation based on the measured three-dimensional shape and orientation of the workpiece 1 and the detected position and shape of the convex portion 2 to calculate the trajectory of a grindstone 8 as it moves to be pressed against the position of the convex portion 2. Here, the grindstone 8 is a grinding tool for grinding the convex portion 2, and is included in a grinder 7, which is an example of a grinding device. The grinder 7 is moved by a robot 6 that has multiple joints. The robot 6 is controlled by a robot motion control device 5. That is, the robot motion control device 5 can, via the robot 6, control the grinder 7 so that the grindstone 8 moves along the calculated trajectory. Further, the calculated trajectory along which the grindstone 8 moves also corresponds to a motion trajectory of the robot 6.

The robot 6 operates based on the generated motion trajectory, and the grindstone 8 comes into contact with the workpiece 1 and the convex portion 2 to grind the convex portion 2. At this time, a grinding reaction force measuring device 9 measures a grinding reaction force that the grindstone 8 receives from the workpiece 1. The robot motion control device 5 controls the motion of the robot 6 to press the grindstone 8 against or move the grindstone 8 away from the workpiece 1 and the convex portion 2 so that the measured grinding reaction force becomes a target grinding reaction force. After grinding the convex portion 2 for a certain time or after a defined grinding amount is reached, the robot motion control device 5 causes the three-dimensional measuring device to measure the shape of the workpiece 1 after grinding. The robot motion control device 5 determines whether a remaining portion of the convex portion 2 has been detected by the image processing device 4, and when the convex portion 2 remains, carries out grinding again. The robot motion control device 5 terminates grinding when the convex portion 2 does not remain. The convex portion grinding system may include an inspection device that inspects the surface of the workpiece 1 at the location of the convex portion 2 after the convex portion 2 has been ground. At this time, the robot motion control device 5 may carry out grinding again or terminate grinding based on the inspection result from the inspection device. The inspection device may comprise the three-dimensional shape measuring device 3 and the image processing device 4.

One of the features of the convex portion grinding system according to the present embodiment is that the robot motion control device 5 controls the grinder 7 so that the grindstone 8 moves along the calculated trajectory while changing the contact angle of the grindstone 8 with respect to the convex portion 2. The grinding carried out by the convex portion grinding system according to the present embodiment while changing the contact angle of the grindstone 8 may be referred to as "variable contact angle grinding".

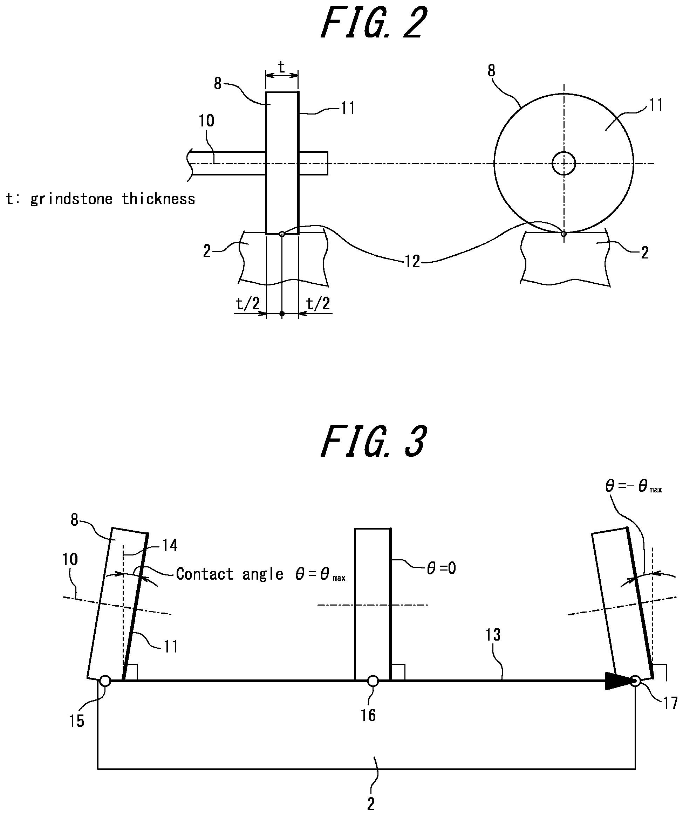

FIG. 2 is a diagram for explaining a reference point 12 of the grindstone 8. The reference point 12 is the point where the convex portion 2 and the grindstone 8 come into contact when the grindstone 8 is in a reference orientation. However, when a portion in contact is not a point, this means the center of the portion of contact. According to the present embodiment, the grindstone 8 rotates around an axis of rotation 10. When viewed from a viewpoint where the axis of rotation 10 is perpendicular to the plane of the paper (right-side diagram in FIG. 2), the point where the convex portion 2 and the grindstone 8 make contact is the reference point 12. When viewed from the viewpoint where the axis of rotation 10 is parallel to the plane of the paper (left-side diagram in FIG. 2), the thickness of the grindstone 8 is t. The point where the convex portion 2 and the grindstone 8 come into contact at t/2 from the grindstone surface 11, the end surface of the grindstone 8, is the reference point 12 (the reference point 12 in the thickness direction of the grindstone 8). An example of t, which is the thickness of the grindstone 8, is 10 mm to 50 mm.

FIG. 3 is a diagram for explaining a contact angle θ of the grindstone 8. FIG. 3 illustrates a hypothetical cross-section view where a machining trajectory 13 and the axis of rotation 10 are on the plane of the paper (the same plane). The machining trajectory 13 is the trajectory along which the grindstone 8 moves, as calculated by the robot motion control device 5. In FIG. 3, an auxiliary line 14 is drawn perpendicular to the machining trajectory 13, and the contact angle θ is the angle between the auxiliary line 14 and the grindstone surface 11. In the example in FIG. 3, the point where the grindstone 8 started moving, the point where the grindstone 8 advanced to the midpoint of the machining trajectory 13, and the point where the grindstone 8 finished moving are indicated as trajectory start point 15, trajectory midpoint 16, and trajectory end point 17, respectively. The contact angle θ at the trajectory start point 15 is θmax. The contact angle θ at the trajectory midpoint 16 is 0. The contact angle θ at the trajectory end point 17 is θmin, which is equal to -θmax. An example of θmax is 5°. The grindstone 8 is tilted by the robot motion control device 5 to have a contact angle θ corresponding to displacement from the reference point 12 in one direction (x direction in the example below). In other words, the robot motion control device 5 controls the grinder 7 so that the axis of rotation 10 tilts according to the position where the grindstone 8 is in contact with the convex portion 2. The robot motion control device 5 executes variable contact angle grinding so that θ changes continuously at each position along the machining trajectory 13. In the example illustrated in FIG. 3, the grindstone 8 at the trajectory midpoint 16 assumes a reference orientation, and the trajectory midpoint 16 corresponds to the reference point 12 in the thickness direction of the grindstone 8. In the example illustrated in FIG. 3, the grindstone 8 is tilted symmetrically around the reference point 12 like a pendulum, but this may be asymmetrical (when θmin is not equal to -θmax).

In variable contact angle grinding, the angle at which the grindstone 8 contacts the convex portion 2 changes in various ways to promote grain dropout, resulting in constant grinding with new grains without clogging, thereby achieving high-speed grinding. The change pattern of θ is not limited to the example illustrated in FIG. 3, and may be adjusted in various ways according to grinding conditions such as characteristics of the workpiece 1, characteristics of the grindstone 8, rotation speed, feed rate, and pressing force. For example, by selecting a suitable θ change pattern according to the type of the workpiece 1, even faster machining can be achieved. In the example illustrated in FIG. 3, for the sake of simplicity, the machining trajectory 13 is represented as a straight line. Although the machining trajectory 13 is often a complex curve that matches the shape of the convex portion 2, variable contact angle grinding can be executed by mapping the tangent line of a curved trajectory to the straight line of the machining trajectory 13 as in the example illustrated in FIG. 3.

EXAMPLES

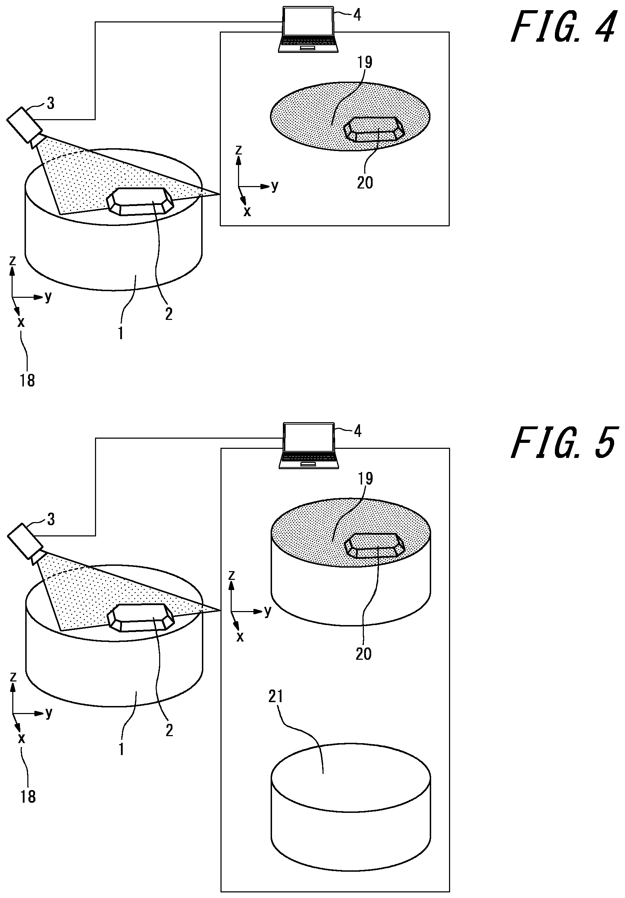

FIG. 4 and FIG. 5 illustrate Examples of recognition of the convex portion 2 by shape measurement. FIG. 4 illustrates logic for recognizing the convex portion 2 by height. First, the image processing device 4 sets a measurement coordinate system 18 when the three-dimensional shape measuring device 3 measures the shape of the workpiece 1. The three-dimensional shape measuring device 3 is a camera. The measurement coordinate system 18 is set so that the height direction is the z coordinate. Workpiece shape data 19 obtained from the measurement by the three-dimensional shape measuring device 3 is typical three-dimensional point cloud data. z-coordinate values in the three-dimensional point cloud data that are at least a certain value are convex portion shape data 20 (point cloud data of the convex portion 2). This method has a very simple recognition logic and can execute operations at high speed. However, the convex portion shape data 20 may contain inaccurate data when the height dimension of the workpiece 1 changes frequently and when there is a large variation in orientation, dimensions, and the like.

FIG. 5 illustrates a method of obtaining the convex portion shape data 20 as a portion that does not exist in comparison CAD data 21, by three-dimensional pattern matching of the measured workpiece shape data 19 and the comparison CAD data 21. The comparison CAD data 21 is CAD data of the workpiece 1. The image processing device 4 obtains the comparison CAD data 21 from a computer or the like where the workpiece 1 was previously designed. This method is not easily affected by variation in orientation and dimension, or variation in shape, of the workpiece 1. For example, when the workpiece 1 at the time of measurement is tilted, the convex portion shape data 20 can be accurately obtained by comparison to the comparison CAD data 21 by tilting in the same way in the image processing device 4.

Here, the method illustrated in FIG. 4 and the method illustrated in FIG. 5 may be selected and applied according to the situation. The image processing device 4 may switch from the method illustrated in FIG. 4 to the method illustrated in FIG. 5 upon, for example, determining that the workpiece 1 is tilted at the time of measurement, or when the workpiece 1 has multiple types of frequently changing height dimensions. By selecting the method according to the situation, the image processing device 4 can increase the precision of recognition of the convex portion 2, accommodate a wide variety of the workpiece 1, and minimize the burden of calculations as much as possible.

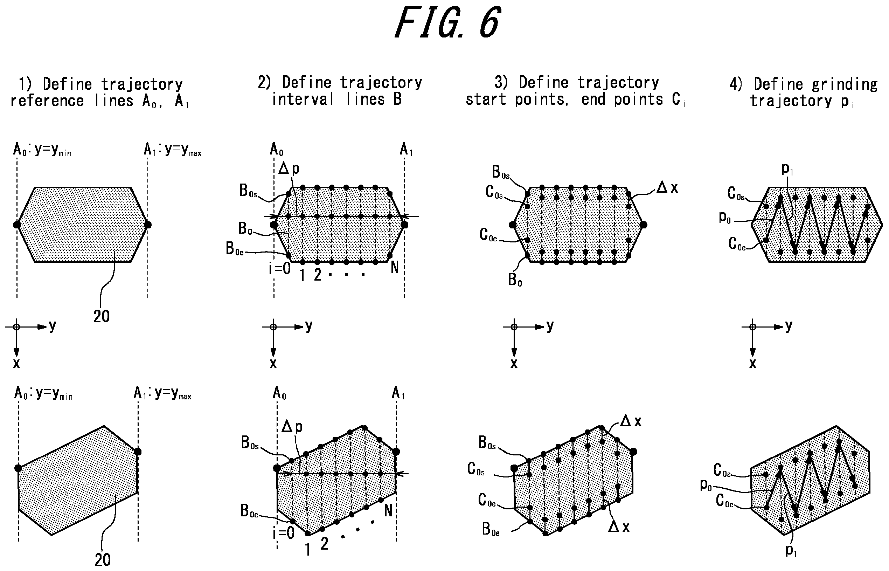

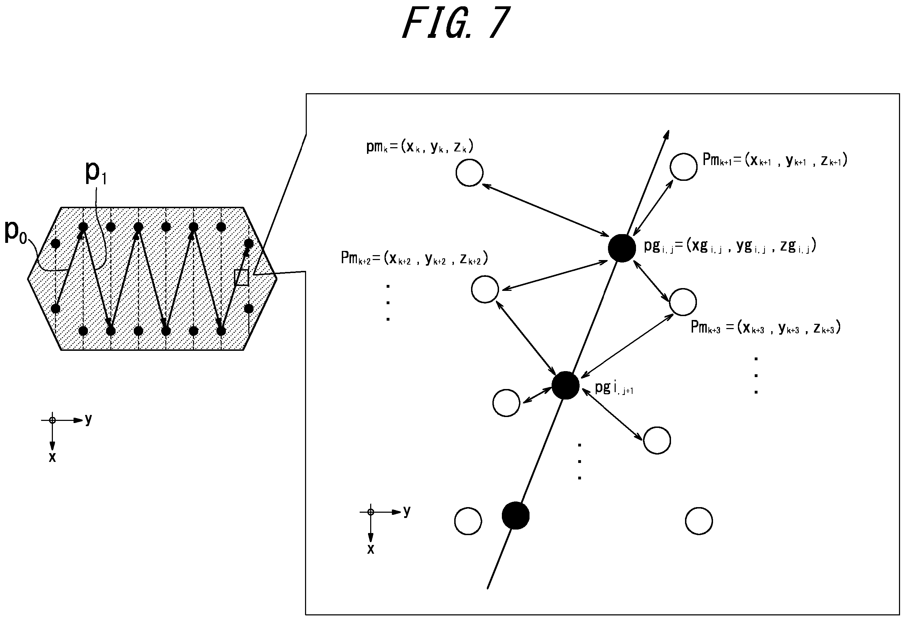

FIG. 6 and FIG. 7 illustrate an example of generation of the machining trajectory 13. FIG. 6 illustrates a method of generating the machining trajectory 13 in the x-y plane. The x-y plane is a plane perpendicular to the z direction, the height direction. In the example illustrated in FIG. 6, the x direction corresponds to the thickness direction of the grindstone 8.

The robot motion control device 5 acquires the convex portion shape data 20 from the image processing device 4 and generates the machining trajectory 13 for grinding the convex portion 2. The robot motion control device 5 generates the machining trajectory 13 in the x-y plane as follows. As illustrated in FIG. 6, under 1), the robot motion control device 5 determines a trajectory reference line $A_0$ that passes through a $y_{min}$ position, which has the smallest y-coordinate position in the convex portion shape data 20 and is parallel to the x-coordinate axis, and a trajectory reference line $A_1$ that passes through $y_{max}$, which has the largest y-coordinate position and is parallel to the x-coordinate axis.

The robot motion control device 5 determines trajectory interval lines $B_i$ (i = 0 to N) that are drawn at equal intervals at pitch $\Delta p$ from the trajectory reference line $A_0$ and are parallel to the x-coordinate axis, as illustrated in FIG. 6 under 2). Here, N is given by $((y_{max} - y_{min})/\Delta p) - 2$.

The pitch $\Delta p$ is set according to the shape of the grindstone 8. When the diameter of the grindstone 8 is D and the assumed depth of cut is ta, the assumed depth of cut width ba is given by $(D - 2ta)\tan(\cos^{-1}(1 - 2ta/D))$. In this case, the pitch $\Delta p$ is $0.1ba \leq \Delta p \leq ba$. Here, the assumed depth of cut ta is determined by conducting grinding experiments in advance, and a range of about 0.1 mm to 8.0 mm is suitable.

The trajectory interval lines $B_i$ have the ends $B_{is}$ and $B_{ie}$, which are the intersections with the outer circumference of the convex portion 2. Here, $B_{is}$ is the intersection with the smaller x-coordinate value and $B_{ie}$ is the intersection with the larger x-coordinate value.

The robot motion control device 5 sets $C_{is}$, points that are larger than $B_{is}$ by $\Delta x$ in the x direction, as illustrated in FIG. 6 under 3). Further, the robot motion control device 5 sets $C_{ie}$, points that are smaller than $B_{ie}$ by $\Delta x$ in the x direction. $\Delta x$ is the width of a margin portion provided in order to avoid protruding from the outer circumference of the convex portion 2 when the grindstone 8 moves along the machining trajectory 13. $\Delta x$ may be determined based on the thickness of the grindstone 8. For example, $\Delta x$ may be defined as t/2, with the thickness of the grindstone 8 being t.

The robot motion control device 5 determines a grinding path $p_i$ from $C_{ie}$ through to $C_{(i+1)s}$ when i is even, as illustrated in FIG. 6, under 4). Further, when i is odd, the robot motion control device 5 determines the grinding path $p_i$ from Cis through to $C_{(i+1)e}$.

FIG. 7 illustrates a calculation of the z-coordinate position of the machining trajectory 13. The robot motion control device 5 divides each grinding path $p_i$ by a machining path division number Np, and sets each division point as a machining path control point $pg_{ij}$ (j = 0 to Np). The machining path division number Np may be determined according to machining precision and measurement density of the convex portion shape data 20 that is point cloud data.

As an example, the machining path division number Np is suitable in a range where LBmax is the largest dimension (maximum value) among the x-direction dimensions $LB_i = \sqrt{(B_{ic} - B_{is})^2}$ (i = 0 to N) of the convex portion 2, and LBmax/t $\leq$ Np. However, the larger the machining path division number Np, the higher the machining precision, but the higher the load on the robot motion control device 5, and therefore LBmax/t > Np may be used, depending on the memory resources of the robot motion control device 5 and the size of the convex portion 2.

The robot motion control device 5 determines machining trajectory control points $pg_{i,j}$ from the four closest measurement points (four point cloud data). For example, as illustrated in FIG. 7, when the four closest measurement

points are $Pm_k = (x_k, y_k, z_k)$, $Pm_{k+1} = (x_{k+1}, y_{k+1}, z_{k+1})$, $Pm_{k+2} = (x_{k+2}, y_{k+2}, z_{k+2})$, and $Pm_{k+3} = (x_{k+3}, y_{k+3}, z_{k+3})$, the z coordinate value of $pg_{i,j}$, $zg_{i,j}$ is expressed by the following.

[Math. 1]

$$dg_{i,j,l} = \sqrt{\left(x_{k+l} - xg_{i,j}\right)^2 + \left(y_{k+l} - yg_{i,j}\right)^2}$$

$$l = 0 \sim 3$$

$$wg_{i,j,l} = \frac{\sum_{n=0}^{3} dg_{i,j,k+n}}{dg_{i,j,k+l}}$$

$$zg_{i,j} = \sum_{l=0}^{3} wg_{i,j,l} z_{k+l}$$

The z-coordinate values $zg_{i,j}$ are calculated by weighting the z-coordinate values of the four measurement points according to their deviations in the x-y plane. Thus, the three-dimensional coordinates of all machining trajectory control points $pg_{i,j}$ are determined. The number of measurement points used to calculate the z-coordinate value $zg_{i,j}$ is not limited to four. As another example, the z-coordinate value $zg_{i,j}$ may be determined by averaging the z-coordinate values of the closest measurement points.

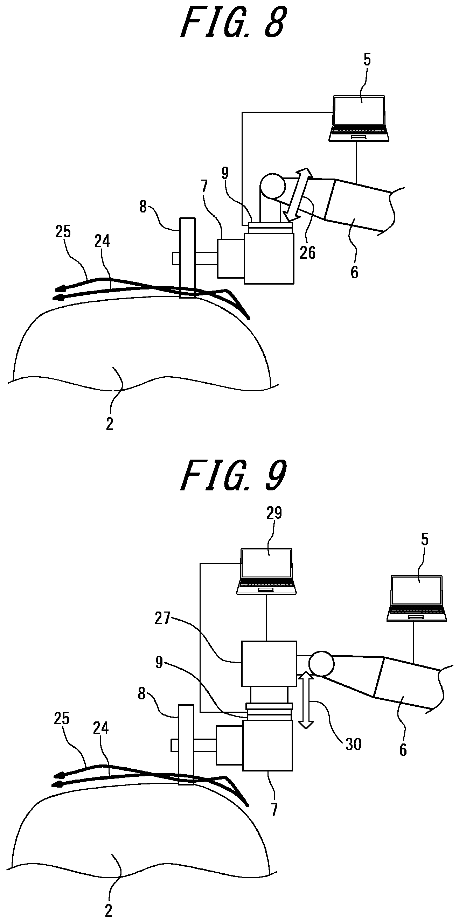

FIG. 8 and FIG. 9 illustrate examples of convex portion grinding system configurations controlled according to grinding reaction force. The machining trajectory 13 is defined as described above, and the grindstone 8 moves on the machining trajectory 13 to execute variable contact angle grinding, in which the contact angle θ is changed according to the moving position in the x-axis direction. Here, in actual grinding, a trajectory shift may occur due to changes in the wear of the grindstone 8 and the contact angle θ of the grindstone 8, and it may be necessary to correct the trajectory. The convex portion grinding system according to the present embodiment uses the grinding reaction force measuring device 9 to measure the reaction force and the like during grinding, and executes feedback control by changing the trajectory to achieve a pre-set target load. For example, the robot motion control device 5 may correct the trajectory based on the measured grinding reaction force and control the grinder 7 so that the grindstone 8 moves along the corrected trajectory. Here, the target load range may be determined, for example, by extracting the load during appropriate grinding from performance data in past grinding.

For example, as illustrated in FIG. 8, measurement data such as the load according to the grinding reaction force measuring device 9 is fed back to the robot motion control device 5 for a planned trajectory 24, which is the machining trajectory 13 calculated as described above. The robot motion control device 5 controls the robot 6 in real time through a trajectory control operation 26 to adjust the actual trajectory of the grindstone 8 to be a control trajectory 25.

According to the present embodiment, the trajectory control operation 26 is considered to be an adjustment operation in the height direction (z-direction). However, the robot motion control device 5 controls the robot 6 that can move in three-dimensional directions, and therefore executes calculations for all three dimension directions, even when the adjustment operation is only in the height direction. As a result, the load of calculations on the robot motion control device 5 may increase. Accordingly, the grinding tool control device may comprise a first grinding tool control device and a second grinding tool control device. The first grinding tool control device corrects the trajectory in the height direction based on a height component of the measured grinding reaction force. The second grinding tool control device corrects the trajectory in a direction different from the height direction based on a component of the measured grinding reaction force in a direction different from the height direction.

FIG. 9 illustrates a case in which the grinding tool control device comprises the first grinding tool control device and the second grinding tool control device. The grindstone 8 is adjusted by a single axis actuator 27 with respect to the height direction. An actuator control device 29, which controls the single-axis actuator 27, adjusts the height of the grindstone 8 in real time by a trajectory control operation 30 based on measured data such as the load measured by the grinding reaction force measuring device 9 that is fed back. The actuator control device 29 corresponds to the first grinding tool control device. Further, the robot motion control device 5 corresponds to the second grinding tool control device. The convex portion grinding system in the configuration illustrated in FIG. 9 corrects trajectory in the height direction and trajectory in a direction different from the height direction with different grinding tool control devices. Therefore, the calculation processing is distributed, avoiding a large calculation load on a single grinding tool control device and enabling high-speed trajectory correction.

As described above, the convex portion grinding system can automatically grind the convex portion 2 that occurs on a wide variety of products through the above configuration. Therefore, the labor of workers who previously performed grinder operations can be allocated to other tasks, thereby improving the work efficiency of production.

Although embodiments of the present disclosure have been described based on the drawings and examples, it should be noted that a person skilled in the art may make variations and modifications based on the present disclosure. Therefore, it should be noted that such variations and modifications are included within the scope of the present disclosure. For example, functions and the like included in each component and step may be rearranged, and a plurality of components and steps may be combined into one or divided, as long as no logical inconsistency results. Although embodiments of the present disclosure have been described with a focus on devices, an embodiment of the present disclosure may also be realized as a method that includes steps executed by components of devices. An embodiment of the present disclosure may be realized as a method, a program executed by a processor provided to a device, or a storage medium on which the program is stored. The scope of the present disclosure should be understood to include these examples.

For example, a convex portion grinding method that includes the following processes may be carried out by a convex portion grinding system. The convex portion grinding method may include a shape measurement process in which the three-dimensional shape measuring device 3 measures the three-dimensional shape and orientation of the workpiece 1. The convex portion grinding method may include a convex portion detection process in which the image processing device 4 detects the convex portion 2 present on the surface of the workpiece 1 and the position and shape of the convex portion 2. The convex portion grinding method may include a grinding process in which the robot motion control device 5 calculates a trajectory along which the grindstone 8 moves to grind the convex portion 2 based on the measured three-dimensional shape and orientation of the workpiece 1 and the detected position and shape of the convex portion 2, and moves the grindstone 8 along the trajectory while changing the contact angle $\theta$ of the grindstone 8 with respect to the convex portion 2. The convex portion grinding method may include an inspection process in which an inspection device inspects the surface of workpiece 1 at the location of the convex portion 2. In the inspection process, the inspection device may carry out a three-dimensional scan or the like on the surface of the workpiece 1, compare the measurement data with the comparison CAD data 21, and when the difference in the height direction is within an acceptable range, judge the workpiece as acceptable.

For example, the convex portion grinding method executed by the convex portion grinding system realizes a method of producing a steel product, in which a convex portion of the surface of a steel product, which is the target material, is ground. This method of producing a steel product can improve steel product productivity by automating grinder operations and the like that are conventionally performed by human workers.

Further, according to the embodiments described above, the image processing device 4, the robot motion control device 5, and the actuator control device 29 are each illustrated as a laptop computer, but may be another type of computer. The image processing device 4, the robot motion control device 5, and the actuator control device 29 may be realized by another computing device that is not a computer, as long as they can communicate with each other.

REFERENCE SIGNS LIST

1 workpiece (example of target material)
2 convex portion
3 three-dimensional shape measuring device (example of shape measuring device)
4 image processing device (example of convex portion detection device)
5 robot motion control device (example of grinding tool control device)
6 robot
7 grinder (example of grinding device)
8 grindstone (example of grinding tool)
9 grinding reaction force measuring device
10 axis of rotation
11 grindstone surface
12 reference point
13 machining trajectory
14 auxiliary line
15 trajectory start point
16 trajectory midpoint
17 trajectory end point
18 measurement coordinate system

19 workpiece shape data
20 convex portion shape data
21 comparison CAD data
24 planned trajectory
25 control trajectory
26 trajectory control operation
27 single-axis actuator
29 actuator control device
30 trajectory control operation

**Claims**

1. A convex portion grinding system comprising:

   a shape measuring device configured to measure three-dimensional shape and orientation of a target material;
   a convex portion detection device configured to detect a convex portion on a surface of the target material and recognize position and shape of the convex portion;
   a grinding device including a grinding tool configured to grind the convex portion; and
   a grinding tool control device configured to calculate a trajectory along which the grinding tool moves based on the measured three-dimensional shape and orientation of the target material and the detected position and shape of the convex portion, and configured to control the grinding device so that the grinding tool moves along the trajectory while changing the contact angle of the grinding tool with respect to the convex portion.

2. The convex portion grinding system according to claim 1, further comprising a grinding reaction force measuring device configured to measure a grinding reaction force that the grinding tool receives from the target material, wherein the grinding tool control device is configured to correct the trajectory based on the measured grinding reaction force and control the grinding device so that the grinding tool moves along the corrected trajectory.

3. The convex portion grinding system according to claim 2, wherein the grinding tool control device comprises a first grinding tool control device and a second grinding tool control device,

   the first grinding tool control device is configured to correct the trajectory in the height direction based on a height component of the measured grinding reaction force, and
   the second grinding tool control device is configured to correct the trajectory in a direction different from the height direction based on a component of the measured grinding reaction force in a direction different from the height direction.

4. The convex portion grinding system according to any one of claims 1 to 3, further comprising an inspection device configured to inspect a surface of the target material at a position of the convex portion after the convex portion is ground.

5. The convex portion grinding system according to any one of claims 1 to 4, wherein the grinding tool is a grindstone configured to rotate around an axis of rotation, and
   the grinding tool control device is configured to control the grinding device so that the axis of rotation is tilted according to the position where the grindstone comes into contact with the convex portion.

6. A convex portion grinding method comprising:

   a shape measuring process of measuring three-dimensional shape and orientation of a target material;
   a convex portion detection process of detecting a convex portion on a surface of the target material and detecting position and shape of the convex portion; and
   a grinding process of calculating a trajectory along which a grinding tool moves to grind the convex portion based on the measured three-dimensional shape and orientation of the target material and the detected position and shape of the convex portion, and grinding the convex portion by moving the grinding tool along the trajectory while changing the contact angle of the grinding tool with respect to the convex portion.

7. The convex portion grinding method according to claim 6, wherein the grinding process further comprises measuring a grinding reaction force that the grinding tool receives from the target material, correcting the trajectory based on the measured grinding reaction force, and moving the grinding tool along the corrected trajectory to grind the convex portion.

8. The convex portion grinding method according to claim 6 or 7, further comprising, after the grinding process, an inspection process of inspecting a surface of the target material at the position of the convex portion.

9. A method of producing a steel product, the method comprising grinding a convex portion on a surface of a steel product, which is the target material, using the convex portion grinding method according to any one of claims 6 to 8.

# FIG. 1

EP 4 566 754 A1

# FIG. 2

t: grindstone thickness

# FIG. 3

Contact angle $\theta = \theta_{max}$

$\theta = 0$

$\theta = -\theta_{max}$

*FIG. 4*

*FIG. 5*

*FIG. 6*

1) Define trajectory reference lines $A_0$, $A_1$

$A_0: y=y_{min}$   $A_1: y=y_{max}$

20

2) Define trajectory interval lines $B_i$

$A_1$  $A_0$  $\Delta p$  $B_{0s}$  $B_0$  $B_{0e}$  $i=0$  1  2 · · · $N$

3) Define trajectory start points, end points $C_i$

$B_{0s}$  $C_{0s}$  $C_{0e}$  $B_0$  $\Delta x$

4) Define grinding trajectory $p_i$

$C_{0s}$  $p_0$  $C_{0e}$  $p_1$

## FIG. 7

$pm_k = (x_k, y_k, z_k)$

$Pm_{k+1} = (x_{k+1}, y_{k+1}, z_{k+1})$

$Pm_{k+2} = (x_{k+2}, y_{k+2}, z_{k+2})$

$pg_{i,j} = (xg_{i,j}, yg_{i,j}, zg_{i,j})$

$Pm_{k+3} = (x_{k+3}, y_{k+3}, z_{k+3})$

$pg_{i,j+1}$

$p_1$

$p_0$

# FIG. 8

# FIG. 9

## INTERNATIONAL SEARCH REPORT

| | International application No. |
| --- | --- |
| | **PCT/JP2023/033779** |

| A. CLASSIFICATION OF SUBJECT MATTER |
| --- |
| *B24B 49/12*(2006.01)i; *B24B 27/00*(2006.01)i; *B24B 49/16*(2006.01)i; *B25J 13/08*(2006.01)i<br>FI:  B24B49/12; B24B27/00 A; B24B49/16; B25J13/08 |
| According to International Patent Classification (IPC) or to both national classification and IPC |

| B. FIELDS SEARCHED |
| --- |
| Minimum documentation searched (classification system followed by classification symbols)<br>  B24B49/12; B24B27/00; B24B49/16; B25J13/08 |
| Documentation searched other than minimum documentation to the extent that such documents are included in the fields searched<br>  Published examined utility model applications of Japan 1922-1996<br>  Published unexamined utility model applications of Japan 1971-2023<br>  Registered utility model specifications of Japan 1996-2023<br>  Published registered utility model applications of Japan 1994-2023 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| X | WO 2022/079974 A1 (JFE STEEL CORPORATION) 21 April 2022 (2022-04-21)<br>  paragraphs [0017]-[0078], fig. 1-11 | 1-9 |
| A | JP 2018-62044 A (WAIDA MFG) 19 April 2018 (2018-04-19)<br>  paragraphs [0023]-[0082], fig. 1-16 | 1-9 |
| A | JP 2019-162681 A (IHI CORP) 26 September 2019 (2019-09-26)<br>  paragraphs [0011]-[0041], fig. 1-8 | 1-9 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 October 2023** | **24 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/033779**

| Patent document cited in search report | | | Publication date (day/month/year) | Patent family member(s) | Publication date (day/month/year) |
|---|---|---|---|---|---|
| WO | 2022/079974 | A1 | 21 April 2022 | EP 4194144 A1 paragraphs [0037]-[0066], fig. 1-11 KR 10-2023-0051579 A | |
| JP | 2018-62044 | A | 19 April 2018 | (Family: none) | |
| JP | 2019-162681 | A | 26 September 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H03178766 A

- JP H11267954 A